# EUROPÄISCHE PATENTSCHRIFT

(11) **EP 3 140 899 B1**
(45) Veröffentlichungstag und Bekanntmachung des Hinweises auf die Patenterteilung: **20.03.2019**
(21) Anmeldenummer: 15712643.4
(22) Anmeldetag: 30.03.2015
(51) Int. Cl.: H02K 7/108, H02K 5/20, B60L 11/14

(54) **BAUEINHEIT FÜR EIN KRAFTFAHRZEUG MIT EINER ELEKTRISCHE MASCHINE UND EINER KUPPLUNGSBETÄTIGUNGSEINRICHTUNG**
MODULE FOR A MOTOR VEHICLE HAVING AN ELECTRIC MACHINE AND A CLUTCH ACTUATING DEVICE
UNITÉ MODULAIRE POUR VÉHICULE AUTOMOBILE COMPRENANT UN MOTEUR ÉLECTRIQUE ET UN DISPOSITIF D'ACTIONNEMENT D'EMBRAYAGE

(30) Priorität: 08.05.2014 DE 102014208633
(43) Veröffentlichungstag der Anmeldung: 15.03.2017
(73) Patentinhaber: ZF Friedrichshafen AG, 88046 Friedrichshafen (DE)
(72) Erfinder: MARKOW, Alexander, 97421 Schweinfurt (DE)
(86) Internationale Anmeldenummer: PCT/EP2015/056837
(87) Internationale Veröffentlichungsnummer: WO 2015/169508

(56) Entgegenhaltungen:
- EP-A1- 1 027 224
- EP-A1- 2 573 910
- EP-A2- 1 396 921
- US-A1- 2010 261 575

## Beschreibung

Die vorliegende Erfindung bezieht sich auf eine Baueinheit für ein Kraftfahrzeug mit einer elektrische Maschine und einer Kupplungsbetätigungseinrichtung gemäß dem Oberbegriff von Patentanspruch 1.

Aus der DE 10 2010 012 707 A1 ist eine Baueinheit bekannt, bei der in einem zentralen Aufnahmeraum des Stators der elektrischen Maschine ein druckmittelbetriebener Betätigungszylinder zur Betätigung einer axial benachbarten Reibungskupplung ausgebildet ist. Zur Versorgung des Betätigungszylinders mit einem Druckmedium ist ein in einem separaten rohrförmigen Druckleitungselement ausgebildeter Druckmittelkanal vorgesehen. Das Druckleitungselement, ist von einem Maschinengehäuse der elektrischen Maschine ausgehend nach radial innen geführt und durchquert dabei einen ringförmigen Kühlmantel des Stators im Wesentlichen in radialer Richtung. Diese Bauweise wird als sehr aufwändig und auch als problematisch empfunden, da das Druckleitungselement gegenüber dem Kühlmantel an zwei Positionen abgedichtet hindurchgeführt werden muss.

Die WO 99/22955 A1 offenbart eine gattungsgemäße Baueinheit mit einer als Innenläufer ausgebildeten elektrischen Maschine, bei welcher der Stator an einem gleichzeitig ein Maschinengehäuse ausbildenden Statorträger festgelegt ist und wobei letzterer in einem außen liegenden zylinderförmigen Abschnitt einen als Ringraum ausgebildeten Fluid-Kühlmantel aufweist. In einem zentralen Aufnahmeraum des Stators ist ein Druckmittelzylinder einer Kupplungsbetätigungseinrichtung angeordnet, welcher sich an einer radial und axial bezüglich des zylinderförmigen Abschnitts nach innen geführten Gehäusezwischenwand abstützen kann. Ein Druckmittelkanal zur Versorgung des Druckmittelzylinders verläuft von einer Stirnseite der Gehäusezwischenwand ausgehend schräg nach innen und damit fernab des Fluid-Kühlmantels.

Der vorliegenden Erfindung liegt die Aufgabe zugrunde, eine Baueinheit der eingangs genannten Art bauraumsparend und hinsichtlich des Druckmittelkanals und des Fluid-Kühlmantels auch betriebssicher auszubilden.

Diese Aufgabe wird durch eine gattungsgemäße Baueinheit mit den kennzeichnenden Merkmalen des Patentanspruchs 1 gelöst.

Es wird vorliegend somit eine Baueinheit für ein Kraftfahrzeug mit einer elektrischen Maschine und einer Kupplungsbetätigungseinrichtung vorgeschlagen, bei welcher die elektrische Maschine ein Maschinengehäuse, einen Rotor und einen Stator aufweist und wobei der Stator einen Statorträger mit einem im Wesentlichen als Ringraum ausgebildeten Fluid-Kühlmantel, einen Fluideinlass und einen von diesem beabstandeten Fluidauslass umfasst. Dabei umschließt der Stator einen zentralen Aufnahmeraum, in welchem ein Druckmittelzylinder der Kupplungsbetätigungseinrichtung angeordnet ist. Dieser Druckmittelzylinder weist einen Druckmitteleinlass auf, welcher innerhalb der axialen Erstreckung des Statorträgers angeordnet ist und welcher über einen vom Maschinengehäuse verlaufenden Druckmittelkanal mit einer Druckquelle in Strömungsverbindung bringbar ist bzw. steht. Dabei ist der Druckmittelkanal zumindest abschnittweise in einem an den Aufnahmeraum angrenzenden Wandabschnitt des Statorträgers, das bedeutet innerhalb des Körpers und im Material des Statorträgers selbst, ausgebildet.

Der Druckmittelkanal bzw. ein Teilabschnitt des Druckmittelkanals kann so z.B. gußtechnisch oder mittels einer oder mehrerer Bohrungen in diesen Wandabschnitt eingebracht werden. Der Druckmittelzylinder kann als ein Fluid- oder als ein Pneumatikzylinder ausgeführt sein.

Gemäß der Erfindung wird bei einer solchen Baueinheit vorgeschlagen, dass der Statorträger-Wandabschnitt mit dem Druckmittelkanal radial in den Ringraum des Kühlmantels eingreift. Dadurch kann einerseits die radiale Erstreckung des Statorträgers vergleichsweise klein gehalten werden, wodurch andererseits der Aufnahmeraum zur Aufnahme des Druckmittelzylinders optimiert werden kann. Der besagte Wandabschnitt mit dem Druckmittekanal kann nur über einen Teil oder über die gesamte der axialen Erstreckung des Kühlmantels ausgebildet sein. Ebenso kann der Wandabschnitt entweder nur teilweise oder ganz über die radiale Erstreckung des Kühlmantels ausgebildet sein. Im letzteren Fall kann also der Druckmittelkanal den Kühl-Fluidmantel bzw. dessen Radialbereich beispielsweise durchqueren. Der Wandabschnitt des Statorträgers mit dem Druckmittelkanal stellt für das im Kühlmantel strömende Fluid eine Barriere dar, welche zunächst die effektiv wirksame Kühlfläche vergrößert und welche als ein Fluidleitelement zur gewünschten Beeinflussung des Fluidstroms wirksam sein kann. Der Wandabschnitt mit dem Druckmittelkanal kann grundsätzlich an einer beliebigen Umfangsposition des Kühlmantels ausgeführt sein.

Die vorgeschlagene Lösung kann auf vielfältige Weise realisiert werden. Der Druckmittelkanal kann beispielsweise abschnittweise außerhalb der radialen Erstreckung des Kühlmantels, vorzugsweise mit axialer Erstreckung und zu dem Kühlmantel benachbart am Statorträger ausgebildet sein. Der Druckmittelkanal kann je nach konkreter Ausgestaltung des Wandabschnitts am Statorträger auch ganz innerhalb der radialen Erstreckung des Kühlmantels ausgebildet werden.

Dadurch, dass der Druckmitteleinlass des Druckmittelzylinders innerhalb der axialen Erstreckung des Statorträgers vorgesehen ist, kann unabhängig von der radialen Ausbildung des Druckmittelkanals eine axiale Überlappung des Druckmittelkanals mit dem Fluid-Kühlmantel vorliegen.

Ein weiterer, in radialer Richtung vom Maschinengehäuse in Richtung des Aufnahmeraums verlaufender Abschnitt des Druckmittelkanals kann entweder am Statorträger selbst oder an einem zu diesem benachbarten Element, beispielsweise einer Zwischenwand, koplanar innerhalb einer oder versetzt zu einer von einer Kühlmittelzufuhrleitung und einer Kühlmittelabfuhrleitung aufgespannten Fläche liegen. Vorteilhafte Ausgestaltungen und Weiterbildungen der Erfindung gehen aus den abhängigen Ansprüchen hervor.

Gemäß einer bevorzugten Variante kann der Wandabschnitt mit dem Druckmittelkanal im gegenseitigen Abstandsbereich von Fluideinlass und Fluidauslass des Fluid-Kühlmantels ausgebildet sein. An dieser Position wirkt der Wandabschnitt als ein Fluid-Trennelement und verhindert den unmittelbaren Übertritt von Kühlfluid vom Einlass zum Auslass ohne den Ringraum zu durchfließen. Es kann hier jedoch vorgesehen sein, dass zur Ausbildung eines Strömungsbypasses der besagte Wandabschnitt den Querschnitt des Kühlmantels nur zu einem überwiegenden Teil ausfüllt und einen geringen Anteil des Querschnitts zum Durchtritt eines Teilfluidstroms offen bleibt. Durch diese Maßnahme kann der Ausbildung eines Hotspot im Bereich von Fluideinlass und Fluidauslass des Kühlmantels entgegengewirkt werden.

Gemäß einer bevorzugten und einfachen Bauweise umfasst der Statorträger zur Ausbildung des Fluid-Kühlmantels zwei koaxial zueinander angeordnete Wandungselemente, welche zwischen sich den oben erwähnten Ringraum aufspannen und wobei eines der Wandungselemente den Aufnahmeraum begrenzt und wobei der Wandabschnitt mit dem Druckmittelkanal in dem, den Aufnahmeraum begrenzenden Wandungselement ausgeführt ist. Zur Herstellung einer Dichtverbindung können die Wandungselemente nach dem Zusammenfügen beispielsweise verschweißt oder bei Einsatz von Dichtelementen auch gegenseitig verspannt werden. Eines der Wandungselemente begrenzt den zur Anordnung des Druckmittelzylinders vorgesehenen Aufnahmeraum, während an dem jeweils anderen Wandungselement ein Statorblechpaket des Stators festlegbar ist. Der im Ringraum angeordnete Wandabschnitt mit dem Druckmittelkanal ist dabei insbesondere an dem Wandungselement vorgesehen, welches den Aufnahmeraum zur Anordnung des Druckmittelzylinders begrenzt.

Mit noch weiterem Vorteil kann der Druckmittelzylinder mit einem Zylindergehäuse und mit einem darin axial verlagerbaren Kolben insgesamt als separate, vorgefertigte Funktionseinheit ausgebildet sein, welche beim Zusammenbau der Einheit an dem Statorträger festgelegt wird. Der Druckmitteleinlass des Druckmittelzylinders wird dabei zur Herstellung einer Fluidverbindung mit einem am Statorträger vorgesehenen Druckmittelauslass in Deckung gebracht.

Bevorzugt ist das den Aufnahmeraum begrenzende Wandungselement mit einem Radialwandabschnitt ausgeführt, an welchem das Zylindergehäuse des Druckmittelzylinders anliegt und sich dort bei einer axialen Ausrückbewegung des Kolbens abstützen kann. Der Druckmittelkanal kann somit im Statorträger von einer Eintrittsmündung ausgehend bis zu einer Austrittsmündung des Radialwandabschnitts weitergeführt werden, wobei die Austrittsmündung im montierten Zustand dem Druckmitteleinlass des Druckmittelzylinders gegenüberliegt. Die Austrittsmündung und der Druckmitteleinlass bilden somit eine erste Übergabestelle für das Druckmittel und können dabei in einfacher Weise axial, radial oder unter einem Winkel zueinander positioniert sein.

Gemäß einer weiteren günstigen Ausgestaltung kann vorgesehen sein, dass das Maschinengehäuse eine sich radial in Richtung des Statorträgers erstreckende und an diesem anliegende Zwischenwand aufweist, in welcher der Druckmittelkanal, ein mit dem Fluideinlass in Strömungsverbindung stehender Kühlmittelzufuhrkanal und ein mit dem Fluidauslass in Strömungsverbindung stehender Kühlmittelabfuhrkanal ausgebildet sind.

Alle aufgeführten Kanäle können auf diese Weise mit einem außerhalb der Baueinheit befindlichen Druckmittelanschluß bzw. Kühlmittelanschlüssen verbunden werden, welche von den jeweiligen bevorzugt radial außerhalb der elektrischen Maschine liegenden Anschlußpositionen in Richtung des Aufnahmeraums bis zu dort vorgesehenen Austrittsmündungen dieser Kanäle verlaufen. Dabei bilden die Eintrittsmündung des Druckmittelkanals am Statorträger und die Austrittsmündung des Druckmittelkanals am sich radial erstreckenden Wandungsabschnitt eine weitere Übergabestelle für das Druckmittel. Dieses Mündungspaar kann wiederum axial, radial oder unter einem Winkel zu positioniert sein. Diese Ausgestaltung trifft analog auf die beiden genannten Kühlmittelkanäle zu.

Im Weiteren kann der Druckmittelzylinder an einem radial inneren, axial verlaufenden Rohrfortsatz des Radialwandabschnitts, insbesondere an dessen Außenumfangsfläche angeordnet werden und radial zwischen diesem und dem, den Aufnahmeraum begrenzende Wandungselement festgelegt und dort zentriert sein. Der Rohrfortsatz kann in weiterer Ausgestaltung mit dessen Innenumfangsfläche eine Lagerstelle zur Lagerung des Rotors der elektrischen Maschine und in noch weiterer Hinsicht eine Lagerstelle zur Lagerung einer in der Baueinheit geführten Antriebswelle bilden.

Zur Erzielung einer kompakten Baueinheit ist eine mittels des Druckmittelzylinders betätigbare Kupplungsanordnung axial benachbart zu der elektrischen Maschine angeordnet. Diese Kupplungsanordnung kann bevorzugt als Reibungskupplung ausgeführt werden und kann der Herstellung einer Drehmitnahmeverbindung zwischen einer mit dem Rotor der elektrischen Maschine verbundenen Abtriebswelle und einer durch die elektrische Maschine geführten Antriebswelle dienen.

Nachfolgend wird die Erfindung anhand einer in den Figuren dargestellten Ausführungsform beispielhaft erläutert.

Es zeigen:
- Fig. 1: eine teilweise Axialschnittdarstellung einer Baueinheit für ein Kraftfahrzeug mit einer elektrische Maschine und einer Kupplungsbetätigungseinrichtung mit einem Druckmittelkanal;

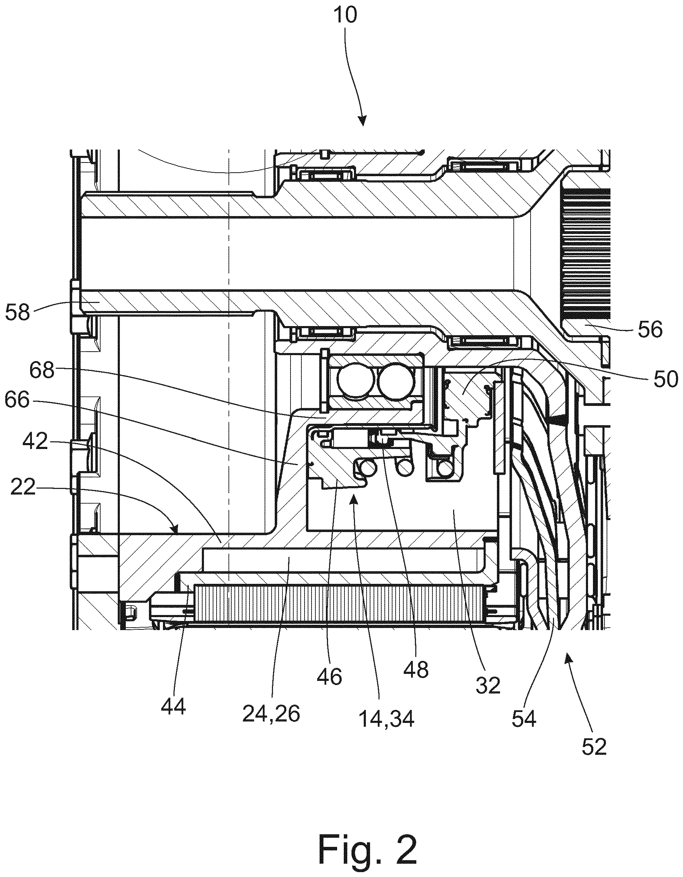

- Fig. 2: eine teilweise Axialschnittdarstellung der Baueinheit von Fig. 1 im Bereich eines Fluid-Kühlmantels;

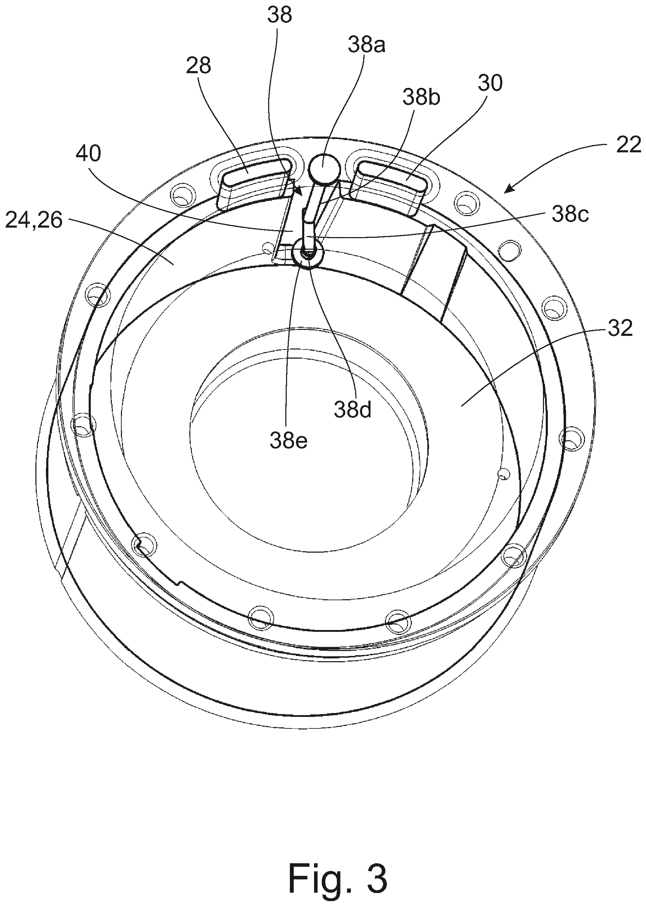

- Fig. 3: eine perspektivische Darstellung eines Statorträgers der Baueinheit von Fig. 1 mit einem darin ausgebildeten Fluid-Kühlmantel und einem Druckmittelkanal ;
- Fig. 4: eine teilweise Lateralschnittdarstellung einer Zwischenwand der Baueinheit von Fig. 1 mit einem darin geführtem Druckmittelkanal und mit einem Kühlmittelzufuhr- und einem Kühlmittelabfuhrkanal.

Gleiche Gegenstände, Funktionseinheiten oder vergleichbare Komponenten sind figurenübergreifend mit den gleichen Bezugszeichen bezeichnet. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

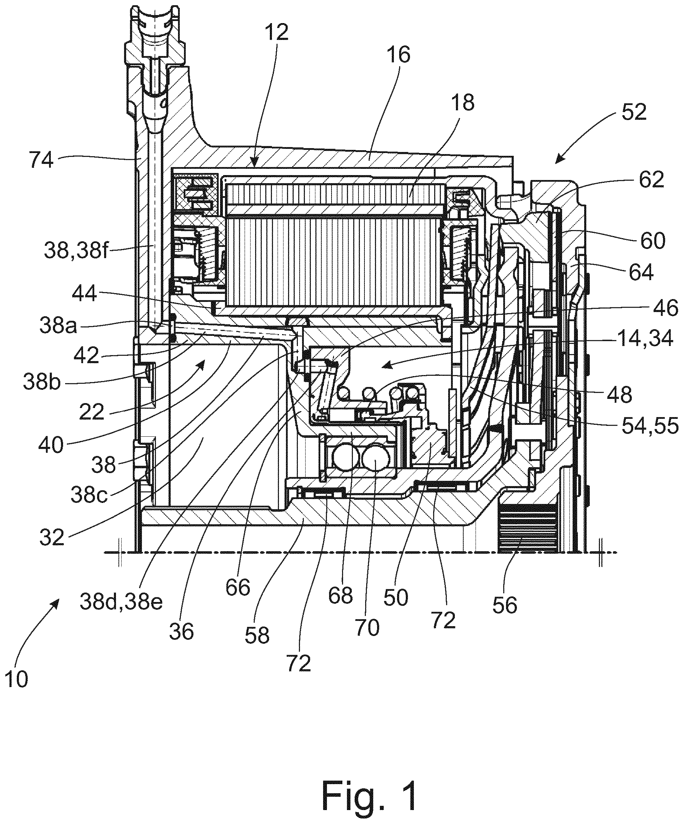

Die Figuren zeigen eine Baueinheit 10 für ein Kraftfahrzeug mit einer elektrischen Maschine 12 und einer Kupplungsbetätigungseinrichtung 14. Dabei weist die elektrisehe Maschine 12 ein Maschinengehäuse 16, einen Rotor 18 und einen Stator 20 auf. Der Stator 20 wird von einem Statorträger 22 getragen, in welchem ein im Wesentlichen als Ringraum 24 ausgebildeter Fluid-Kühlmantel 26, ein Fluideinlass 28 und einen von diesem beabstandeter Fluidauslass 30 vorliegen. Es ist erkennbar, dass der Stator 20 mit dessen Statorträger 22 einen zentralen Aufnahmeraum 32 umschließt, in welchem ein Druckmittelzylinder 34 der Kupplungsbetätigungseinrichtung 14 angeordnet ist. Dieser Druckmittelzylinder 34 weist einen Druckmitteleinlass 36 auf, welcher innerhalb der axialen Erstreckung des Statorträgers 22 angeordnet ist und welcher über einen vom Maschinengehäuse 16 verlaufenden hier mehrteilig ausgeführten Druckmittelkanal 38 mit einer Druckquelle, beispielsweise einem hier nicht dargestellten Geberzylinder, in Strömungsverbindung bringbar ist bzw. steht. Wie in Fig. 1 zu sehen, ist der Druckmittelkanal 38 zumindest abschnittweise in einem an den Aufnahmeraum 32 angrenzenden Wandabschnitt 40 des Statorträgers 22 ausgebildet.

Zur Ausbildung des Fluid-Kühlmantels 26 umfasst der Statorträger 22 zwei koaxial zueinander angeordnete Wandungselemente 42, 44, welche zwischen sich den Ringraum 24 des Fluid-Kühlmantels 26 aufspannen. Dabei begrenzt das radial innere Wandungselement 42 den zentralen Aufnahmeraum 32. Es ist ferner erkennbar, dass der Wandabschnitt 40 mit dem Druckmittelkanal 38 in dem den Aufnahmeraum 32 begrenzenden Wandungselement 42 ausgeführt ist und dass dieser Wandabschnitt 40 radial in den Ringraum 24 des Kühlmantels 26 eingreift. Insbesondere ist der Wandabschnitt 40 mit dem Druckmittelkanal 38 im gegenseitigen, hier umfangsmäßigen Abstandsbereich von Fluideinlass 28 und Fluidauslass 30 des Fluid-Kühlmantels 26 ausgebildet.

Vorliegend ist der Druckmittelzylinder 34 als eine vorgefertigte Funktionseinheit und insbesondere als ein konzentrischer Nehmerzylinder 34 ausgebildet und weist ein gegenüber dem Statorträger 22 separates Gehäuse 46 mit dem Druckmitteleinlass 36 und einen verlagerbaren Kolben 48 mit einem hier nur schematisch dargestellten bekannten Ausrücklager 50 auf. Das Ausrücklager 50 dient der Drehentkopplung zwischen dem Kolben 48 und einer Kupplungsanordnung 52, welche axial benachbart zu der elektrischen Maschine 12 angeordnet ist und welche mittels des Druckmittelzylinders 34 betätigbar ist. Insbesondere liegt dazu einer der Lageringe des Ausrücklagers 50 am Kolben 48 und der andere Lagerring an einem als Membranfeder 54 ausgeführten Ausrückorgan 55 der hier als Reibungskupplung vorliegenden Kupplungsanordnung 52 an. Die Kupplungsanordnung 52 dient der Herstellung einer Drehmitnahmeverbindung zwischen einer mit dem Rotor 18 der elektrischen Maschine 12 verbundenen Abtriebswelle 56 und einer durch die elektrische Maschine 12 geführten Antriebswelle 58, welche hierzu eine Reibscheibe 60 trägt. Diese Reibscheibe 60 ist kraftschlüssig zwischen einer mit der Membranfeder 54 zusammenwirkenden und axial verlagerbaren Druckplatte 62 und einer mit der Abtriebswelle 56 verbundenen Anpressplatte 64 eingespannt.

Das Zylindergehäuse 46 des Druckmittelzylinders 34 stützt sich axial an einem Radialwandabschnitt 66 des den Aufnahmeraum 32 begrenzenden Wandungselements 42 ab und ist gleichzeitig an der Außenumfangsfläche eines radial inneren Rohrfortsatzes 68 des Radialwandabschnitts 66 aufgenommen bzw. angeordnet. Der Rohrfortsatz 68 bildet gleichzeitig mit dessen Innenumfangsfläche eine Lagerstelle zur Lagerung des Rotors 18 der elektrischen Maschine 12 mittels eines dort angeordneten Wälzlagers 70 und in noch weiterer Hinsicht eine Lagerstelle zur Lagerung der in der Baueinheit 10 geführten Antriebswelle 58 mittel zwei axial beabstandeter Wälzlagereinheiten 72.

Der Druckmittelkanal 38 ist in dem Wandungselement 42 etwa z-förmig ausgebildet und weist dazu einen ersten, in dem Wandabschnitt 40 von einer Eintrittsmündung 38a ausgehend nahezu axial verlaufenden Teilabschnitt 38b, einen zweiten radial in den Radialwandabschnitt 66 übertretenden Teilabschnitt 38c und einen dritten, etwa axial verlaufenden Teilabschnitt 38d auf. Letzterer mündet in der Austrittsmündung 38e, die axial benachbart zu dem Druckmitteleinlass 36 des Druckmittelzylinders 34 angeordnet ist. Die genannten drei Teilabschnitte 38b, c, d sind jeweils als Sackbohrungen ausgeführt. Der radial verlaufende Teilabschnitt 38c dient der Verbindung der weiteren Teilabschnitte 38b, d. Der im Bereich des Fluid-Kühlmantels 26 liegende Eintrittsbereich des Teilabschnitts 38c bzw. der Bohrung wird auf der Seite des Ringraums 24 fluiddicht, z.B. durch eine Verschweißung verschlossen, so dass ein gegenseitiger Übertritt von Kühlmittel und Druckmittel in das jeweils andere Fluidsystem sicher unterbunden wird. Die Austrittsmündung 38e und der Druckmitteleinlass 36 bilden somit eine erste Übergabestelle für das Druckmittel.

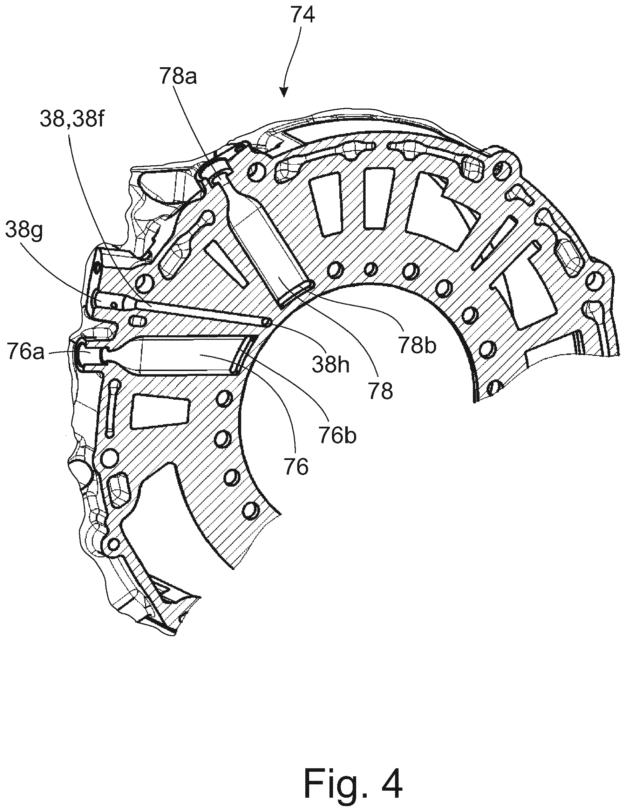

In Fig. 1, 4 ist erkennbar, dass das Maschinengehäuse 16 eine sich radial in Richtung des Statorträgers 22 erstreckende und an diesem anliegende Zwischenwand 74 aufweist, in welcher ein Teilabschnitt 38f des Druckmittelkanals 38, ein mit dem Fluideinlass 28 in Strömungsverbindung stehender Kühlmittelzufuhrkanal 78 und ein mit dem Fluidauslass 30 in Strömungsverbindung stehender Kühlmittelabfuhrkanal 76 ausgebildet sind. Auch hierbei ist der Druckmittelkanal 38 mit einem Abschnitt 38f zwischen, vorliegend insbesondere umfangsmäßig zwischen dem Kühlmittelzufuhrkanal 78 und dem Kühlmittelabfuhrkanal 76 und mit diesen in einer gemeinsamen Querschnittsebene angeordnet.

Der im Statorträger 22 geführte Druckmittelkanal 38 und der Fluid-Kühlmantel 26 können mittels der Zwischenwand und der Kanäle 38f, 76, 78 beispielweise mit außerhalb der Baueinheit 10 geführten Druckmittel- und Kühlmittelleitungen verbunden werden. Die Kanäle 38f, 76, 78 verlaufen von den jeweiligen Anschlußpositionen an der Außenseite des Maschinengehäuses 16 bzw. von entsprechenden Eintrittsmündungen 38g, 76a, 78a in Richtung des Aufnahmeraums bis zu dort vorgesehenen Austrittsmündungen 38h, 76b, 78b dieser Kanäle verlaufen. Die Eintrittsmündung 38a des Druckmittelkanals 38 am Statorträger 22 und die Austrittsmündung 38h des Druckmittelkanals 38 bilden an der Zwischenwand 74 eine weitere, zweite Übergabestelle für das Druckmittel. Dieses Mündungspaar 38a, 38h ist vorliegend wiederum axial zueinander positioniert. Diese Ausgestaltung trifft analog auf die beiden Kühlmittelkanäle 76, 78 zu. An den Übergabestellen sind jeweils in einer üblichen Weise entsprechende Dichtmittel eingesetzt.

### Bezugszeichen

- 10: Baueinheit
- 12: elektrische Maschine
- 14: Kupplungsbetätigungseinrichtung
- 16: Maschinengehäuse
- 18: Rotor
- 20: Stator
- 22: Statorträger
- 24: Ringraum
- 26: Fluid-Kühlmantel
- 28: Fluideinlass
- 30: Fluidauslass
- 32: Aufnahmeraum
- 34: Druckmittelzylinder
- 36: Druckmitteleinlass
- 38: Druckmittelkanal
- 38a: Eintrittsmündung
- 38b, c, d: Druckmittelkanal-Teilabschnitt
- 38e: Austrittsmündung
- 38f: Druckmittelkanal-Teilabschnitt
- 38g: Eintrittsmündung
- 38h: Austrittsmündung
- 40: Wandabschnitt
- 42,44: Wandungselement
- 46: Gehäuse
- 48: Kolben
- 50: Ausrücklager
- 52: Kupplungsanordnung
- 54: Membranfeder
- 55: Ausrückorgan
- 56: Abtriebswelle
- 58: Antriebswelle
- 60: Reibscheibe
- 62: Druckplatte
- 64: Anpressplatte
- 66: Radialwandabschnitt
- 68: Rohrfortsatz
- 70,72: Wälzlager
- 74: Zwischenwand
- 76: Kühlmittelabfuhrkanal
- 76a: Eintrittsmündung
- 76b: Austrittsmündung
- 78: Kühlmittelzufuhrkanal
- 78a: Eintrittsmündung
- 78b: Austrittsmündung

## Patentansprüche

1. Baueinheit (10) für ein Kraftfahrzeug mit einer elektrische Maschine (12) und einer Kupplungsbetätigungseinrichtung (14), wobei
- die elektrische Maschine (12) ein Maschinengehäuse (16), einen Rotor (18) und einen Stator (20) aufweist, und wobei
- der Stator (20) einen Statorträger (22) mit einem im Wesentlichen als Ringraum (24) ausgebildeten Fluid-Kühlmantel (26), einen Fluideinlass (28) und einen von diesem beabstandeten Fluidauslass (30) umfasst und wobei
- der Stator (20) einen zentralen Aufnahmeraum (32) umschließt, in welchem ein Druckmittelzylinder (34) der Kupplungsbetätigungseinrichtung (14) angeordnet ist, wobei
- der Druckmittelzylinder (34) einen Druckmitteleinlass (36) aufweist, welcher innerhalb der axialen Erstreckung des Statorträgers (22) angeordnet ist und welcher über einen vom Maschinengehäuse (16) verlaufenden Druckmittelkanal (38), mit einer Druckquelle in Strömungsverbindung bringbar ist bzw. steht, wobei
- der Druckmittelkanal (38) zumindest abschnittweise in einem an den Aufnahmeraum (32) angrenzenden Wandabschnitt (40) des Statorträgers (22) ausgebildet ist.
**dadurch gekennzeichnet, dass** der Wandabschnitt (40) radial in den Ringraum (24) des Fluid-Kühlmantels (26) eingreift.

2. Baueinheit nach Anspruch 1, **dadurch gekennzeichnet, dass** der Wandabschnitt (40) im gegenseitigen Abstandsbereich von Fluideinlass (28) und Fluidauslass (30) des Fluid-Kühlmantels (26) ausgebildet ist.

3. Baueinheit nach Anspruch 1 oder 2, **dadurch gekennzeichnet, dass** der Statorträger (22) zur Ausbildung des Fluid-Kühlmantels (26) zwei koaxial zueinander angeordnete Wandungselemente (42, 44) umfasst, welche zwischen sich den Ringraum (24) aufspannen und wobei eines der Wandungselemente (42) den Aufnahmeraum begrenzt (32) und wobei der Wandabschnitt (40) mit dem Druckmittelkanal (38) in dem den Aufnahmeraum (32) begrenzenden Wandungselement (42) ausgeführt ist.

4. Baueinheit nach einem der Ansprüche 1 - 3, **dadurch gekennzeichnet, dass** der Druckmitteleinlass (36) des Druckmittelzylinders (34) an einem separat vom Statorträger (22) ausgebildeten Zylindergehäuse (46) vorgesehen ist.

5. Baueinheit nach einem der Ansprüche 1 - 4 **dadurch gekennzeichnet, dass** sich das Zylindergehäuse (46) des Druckmittelzylinders (34) an einem Radialwandabschnitt (66) des den Aufnahmeraum (32) begrenzenden Wandungselements (42) abstützt und dass der Druckmittelkanal (38) zumindest abschnittweise in diesem Wandungselement (42) verläuft und im Bereich des Radialwandabschnitts (66) in den Druckmitteleinlass (36) des Druckmittelzylinders (34) mündet.

6. Baueinheit nach einem der Ansprüche 1 - 5, **dadurch gekennzeichnet, dass** das Maschinengehäuse (16) eine sich radial in Richtung des Statorträgers (22) erstreckende und an diesem anliegende Zwischenwand (74) aufweist, in welcher der Druckmittelkanal (38), ein mit dem Fluideinlass (28) in Strömungsverbindung stehender Kühlmittelzufuhrkanal (78) und ein mit dem Fluidauslass (30) in Strömungsverbindung stehender Kühlmittelabfuhrkanal (76) ausgebildet sind.

7. Baueinheit nach einem der Ansprüche 1 - 6, **dadurch gekennzeichnet, dass** der Druckmittelzylinder (34) an einem radial inneren Rohrfortsatz (68) des Radialwandabschnitts (66) angeordnet ist.

8. Baueinheit nach einem der Ansprüche 1 - 7, **dadurch gekennzeichnet, dass** axial benachbart zu der elektrischen Maschine (12) eine mittels des Druckmittelzylinders (34) betätigbare Kupplungsanordnung (52) angeordnet ist.

## Claims

1. Structural unit (10) for a motor vehicle having an electric machine (12) and a clutch actuating device (14),
- the electric machine (12) having a machine housing (16), a rotor (18) and a stator (20), and
- the stator (20) comprising a stator carrier (22) with a fluid cooling jacket (26) which is configured substantially as an annular space (24), a fluid inlet (28) and a fluid outlet (30) which is spaced apart from the latter, and
- the stator (20) enclosing a central receiving space (32), in which a pressure medium cylinder (34) of the clutch actuating device (14) is arranged,
- the pressure medium cylinder (34) having a pressure medium inlet (36) which is arranged within the axial extent of the stator carrier (22) and which can be flow-connected or is flow-connected to a pressure source via a pressure medium duct (38) which runs from the machine housing (16),
- the pressure medium duct (38) being configured at least in sections in a wall section (40) of the stator carrier (22), which wall section (40) adjoins the receiving space (32),
**characterized in that** the wall section (40) engages radially into the annular space (24) of the fluid cooling jacket (26).

2. Structural unit according to Claim 1, **characterized in that** the wall section (40) is configured in the mutual spacing region of the fluid inlet (28) and the fluid outlet (30) of the fluid cooling jacket (26).

3. Structural unit according to Claim 1 or 2, **characterized in that**, in order to configure the fluid cooling jacket (26), the stator carrier (22) comprises two wall elements (42, 44) which are arranged coaxially with respect to one another and define the annular space (24) between them, and one of the wall elements (42) delimiting (32) the receiving space, and the wall section (40) with the pressure medium duct (38) being configured in the wall element (42) which adjoins the receiving space (32).

4. Structural unit according to one of Claims 1 to 3, **characterized in that** the pressure medium inlet (36) of the pressure medium cylinder (34) is provided on a cylinder housing (46) which is configured separately from the stator carrier (22).

5. Structural unit according to one of Claims 1 to 4, **characterized in that** the cylinder housing (46) of the pressure medium cylinder (34) is supported on a radial wall section (66) of the wall element (42) which delimits the receiving space (32), and **in that** the pressure medium duct (38) runs at least in sections in the said wall element (42) and opens into the pressure medium inlet (36) of the pressure medium cylinder (34) in the region of the radial wall section (66).

6. Structural unit according to one of Claims 1 to 5, **characterized in that** the machine housing (16) has an intermediate wall (74) which extends radially in the direction of the stator carrier (22), bears against the latter, and in which the pressure medium duct (38), a coolant feed duct (78) which is flow-connected to the fluid inlet (28), and a coolant discharge duct (76) which is flow-connected to the fluid outlet (30) are configured.

7. Structural unit according to one of Claims 1 to 6, **characterized in that** the pressure medium cylinder (34) is arranged on a radially inner tubular projection (68) of the radial wall section (66).

8. Structural unit according to one of Claims 1 to 7, **characterized in that** a clutch arrangement (52) which can be actuated by means of the pressure medium cylinder (34) is arranged axially adjacently with respect to the electric machine (12).

## Revendications

1. Unité modulaire (10) pour un véhicule automobile comprenant une machine électrique (12) et un dispositif d'actionnement d'embrayage (14), dans laquelle
- la machine électrique (12) présente un boîtier de machine (16), un rotor (18) et un stator (20), et dans laquelle
- le stator (20) comprend un support de stator (22) avec une chemise de refroidissement par fluide (26) formée essentiellement par une chambre annulaire (24), une entrée de fluide (28) et une sortie de fluide (30) espacée de celle-ci, et dans laquelle
- le stator (20) entoure une chambre de réception centrale (32), dans laquelle un cylindre de milieu comprimé (34) du dispositif d'actionnement d'embrayage (14) est disposé, dans laquelle
- le cylindre de milieu comprimé (34) présente une entrée de milieu comprimé (36), qui est disposée à l'intérieur de l'extension axiale du support de stator (22) et qui peut être ou est en communication d'écoulement avec une source de pression au moyen d'un canal de milieu comprimé (38) s'étendant à partir du boîtier de machine (16), dans laquelle
- le canal de milieu comprimé (38) est formé au moins partiellement dans une partie de paroi (40) du support de stator (22) adjacente à la chambre de réception (32),
**caractérisée en ce que** la partie de paroi (40) s'engage radialement dans la chambre annulaire (24) de la chemise de refroidissement par fluide (26).

2. Unité modulaire selon la revendication 1, **caractérisée en ce que** la partie de paroi (40) est formée dans la région distante opposée de l'entrée de fluide (28) et de la sortie de fluide (30) de la chemise de refroidissement par fluide (26).

3. Unité modulaire selon la revendication 1 ou 2, **caractérisée en ce que** le support de stator (22) comprend pour la formation de la chemise de refroidissement par fluide (26) deux éléments de paroi (42, 44) disposés de façon coaxiale l'un à l'autre, qui enferment entre eux la chambre annulaire (24) et dans laquelle un des éléments de paroi (42) limite (32) la chambre de réception et dans laquelle la partie de paroi (40) avec le canal de milieu comprimé (38) est réalisée dans l'élément de paroi (42) limitant la chambre de réception (32).

4. Unité modulaire selon l'une quelconque des revendications 1 à 3, **caractérisée en ce que** l'entrée de milieu comprimé (36) du cylindre de milieu comprimé (34) est prévue sur un boîtier de cylindre (46) formé séparément du support de stator (22).

5. Unité modulaire selon l'une quelconque des revendications 1 à 4, **caractérisée en ce que** le boîtier de cylindre (46) du cylindre de milieu comprimé (34) s'appuie sur une partie de paroi radiale (66) de l'élément de paroi (42) limitant la chambre de réception (32) et **en ce que** le canal de milieu comprimé (38) s'étend au moins en partie dans cet élément de paroi (42) et débouche dans la région de la partie de paroi radiale (66) dans l'entrée de milieu comprimé (36) du cylindre de milieu comprimé (34).

6. Unité modulaire selon l'une quelconque des revendications 1 à 5, **caractérisée en ce que** le boîtier de machine (16) présente une paroi intermédiaire (74) s'étendant radialement en direction du support de stator (22) et appliquée sur celui-ci, dans laquelle le canal de milieu comprimé (38), un canal d'arrivée de milieu comprimé (78) agencé en communication d'écoulement avec l'entrée de fluide (28) et un canal d'évacuation de milieu comprimé (76) agencé en communication d'écoulement avec la sortie de fluide (30) sont formés.

7. Unité modulaire selon l'une quelconque des revendications 1 à 6, **caractérisée en ce que** le cylindre de milieu comprimé (34) est disposé sur un prolongement tubulaire radialement intérieur (68) de la partie de paroi radiale (66).

8. Unité modulaire selon l'une quelconque des revendications 1 à 7, **caractérisée en ce qu'**un dispositif d'embrayage (52) actionnable au moyen du cylindre de milieu comprimé (34) est disposé axialement à proximité de la machine électrique (12).
